# EUROPEAN PATENT SPECIFICATION

(11) **EP 2 977 171 B1**
(45) Date of publication and mention of the grant of the patent: **12.07.2017**
(21) Application number: 13879172.8
(22) Date of filing: 30.04.2013
(51) Int. Cl.: B29C 49/28, B29C 49/42, B29C 49/56, B29C 49/48, B29L 31/00

(54) **BOTTLE BLOWING MACHINE**
FLASCHENBLASMASCHINE
MACHINE DE SOUFFLAGE DE BOUTEILLE

(30) Priority: 19.03.2013 CN 201310088020
(43) Date of publication of application: 27.01.2016
(73) Proprietor: Jiangsu Newamstar Packaging Machinery Co., Ltd, Zhangjiagang, Jiangsu 215624 (CN)
(72) Inventor: DONG, Hailong, Jiangsu 215624 (CN); RUI, Xiaoju, Jiangsu 215624 (CN); CAI, Tongjing, Jiangsu 215624 (CN); HE, Deping, Jiangsu 215624 (CN)
(74) Representative: Gulde & Partner
(86) International application number: PCT/CN2013/075031
(87) International publication number: WO 2014/146336

(56) References cited:
- EP-A2- 2 422 955
- WO-A1-2005/058572
- CN-A- 1 651 221
- CN-U- 203 185 628
- DE-A1-102007 022 638
- FR-A1- 2 841 495
- US-A1- 2004 009 257

## Description

### Field of the Invention

The present invention relates to a bottle blowing machine.

### Description of the Related Art

A bottle blowing machine is a machine for blowing plastic granules (soften as liquid) or a bottle preform into a bottle by a certain process. Generally the bottle blowing machine is provided with a mould opening and closing mechanism, a bottom mould elevating mechanism, a bottom mould locking mechanism and a driving mechanism. A conventional mould opening and closing mechanism comprises a machine frame, a fixed mould plate and a moving mould plate which are mounted on the machine frame. A mould locking mechanism is provided at the joint of the fixed mould plate and the moving mould plate. The moving mould plate is L-shaped and driven by a mould opening and closing air cylinder. The mould opening and closing air cylinder drives a spline, and the spline drives a moving mould plate gear mounted on a gear shaft, and the gear shaft is connected with the moving mould plate and mounted on a support frame.

A conventional bottom mould elevating mechanism comprises an elevating bracket and a bottom mould cam. The elevating bracket is provided with a guide rail, a guide rod and a roll wheel. The elevating bracket is mounted into a sliding groove of the machine frame by the guide rail. A spring is sheathed on the guide rod, a wheel shaft protruding towards a side is provided at the bottom of the elevating bracket, and the roll wheel is mounted on the wheel shaft. The bottom mould cam is located above the roll wheel and contacts the roll wheel. The guide rod is mounted on a support plate laterally extending on the top of the elevating bracket and. The spring is located between the support plate and the machine frame. The bottom mould elevating mechanism presses the elevating bracket by means of the bottom mould cam such that the bottom mould descends, and the elevating bracket is uplifted under the effect of the spring such that the bottom mould rises.

A conventional bottom mould locking mechanism comprises a mould mounting plate, a bottle mould, a bottom mould, an actuating mechansim, a positioning mechanism and a supporting seat. The end of the cavity of the bottle mould is sleeved with the bottom mould which is connected with the actuating mechanism. The positioning mechanism is horizontally disposed on the support seat and comprises a positioning block air cylinder and a positioning block connected with each other. The actuating mechanism comprises a bottom mould mounting plate and a bottom mould elevating air cylinder. An upper surface of the bottom mould mounting plate is connected with the bottom mould, and a lower surface of the bottom mould mounting plate is connected with the bottom mould elevating air cylinder which is mounted on a support frame.

The driving mechanisms work in self-driven way, and the bottle blowing machines of the prior art are bulky and complicated in structure, thus, the bottle blowing machines are inconvenient in operation and high-cost. Related prior art devices are described in documents CN1651221A, EP-A-2422955 and DE10-2007-022638.

### Summary of the Invention

An object of the invention is to provide a bottle blowing machine.

For the foregoing purpose, the following technical solution is utilized in the invention:
A bottle blowing machine, comprising
   a machine frame;
   a mould opening and closing assembly having a mould opening state and a mould closing state, which comprises a fixed mould plate fixedly disposed on the machine frame, a bottom mould slidable in a vertical direction relative to the fixed mould plate, and a moving mould plate rotatably connected with the fixed mould plate by a rotation shaft, when the mould opening and closing assembly is in the mould closing state, the fixed mould plate, the moving mould plate and the bottom mould together enclose to provide a cavity;
   an elevating assembly comprising a protrusion fixedly disposed on the rotation shaft, an elevating rod fixedly connected with the bottom mould, and a sliding block fixed on the elevating rod, a guiding groove is opened on the protrusion, and the sliding block is slidably inserted into the guiding groove, in the course of rotation of the rotation shaft, the contact position of the guiding groove with the sliding block rises or descends, and the sliding block moves in the up-down direction under the guiding of the guiding groove;
   a bottom mould locking assembly comprising a locking part slidably disposed on the machine frame, a swing member swingably connected with the machine frame around a first axis for driving the sliding of the locking part, a rotation member fixedly connected with the rotation shaft and rotatable relative to the machine frame around a second axis for controlling the swinging of the swing member relative to the machine frame, when the mould opening and closing assembly is in the mould closing state, the locking part contacts against the bottom mould such that the bottom mould is separated from the machine frame; and
   a power source for driving the rotation of the rotation shaft.

Preferably, the rotation shaft extends through the moving mould plate, the rotation member and the protrusion from up to down in sequence.

Preferably, the mould opening and closing assembly also comprises a locking mechanism for locking the moving mould plate with the fixed mould plate in the mould closing state. The locking mechanism comprises a connecting shaft slidably disposed on the fixed mould plate, a connecting rod fixedly connected with the connecting shaft and a locking pin fixedly connected with the connecting rod. At least one first connecting convex platform is provided on the moving mould plate, and a pin hole is opened on the connecting convex platform, a second connecting projection staggered with the first connection projection in up-down direction is provided on the fixed mould plate, and a hole is opened on the second connecting convex platform for connecting rod and the locking pin sliding therein. When in the mould opening state, the locking pin is positioned in the hole, and when in the mould closing state, the locking pin slides relative to the second connecting convex platform and extends through the hole to insert into the pin hole.

Preferably, the rotation member has a guiding surface thereon and a projection is formed on the swing member, the swing member slidably contacts with the guiding surface relative to each other, and the distance between the contact position of the projection with the guiding surface and the second axis changes with the rotation of the rotation member.

Preferably, an elastic member is arranged between the swing member and the machine frame for providing a restoring force for the swing member, a convex column is formed on the locking part and a U-shaped portion is formed on the swing member at a distance from the first axis, and the convex column is slidably inserted into the U-shaped portion.

More preferably, the machine frame comprises a support frame, an upper frame located above the support frame and an upright frame fixedly connected between the support frame and the upper frame, the mould opening and closing assembly and bottom locking assembly are located above the support frame, and the protrusion is located below the support frame.

More preferably, a first through-hole is opened on the support frame for the elevating rod extending through therein, and a second through-hole for the rotation shaft extending through therein, the elevating rod is slidable in the first through-hole in the up-down direction, and the rotation shaft is rotatable in the second through-hole. More preferably, an upper end of the rotation shaft is rotatably connected with the upper frame.

More preferably, the first axis and second axis are parallel to each other. The rotation member, the swing member and the locking part are located above an upper surface of the support frame.

Preferably, a swing arm is connected on a lower end of the rotation shaft, and the power source drives the rotation of the rotation shaft by the swing arm.

More preferably, the swing arm is fixedly connected with the lower end of the rotation shaft.

Preferably, the axis of rotation of the rotation shaft is parallel to the direction of movement of the elevating rod relative to the machine frame, and the guiding groove inclinedly extends relative to a plane perpendicular to the axis of rotation.

More preferably, the protrusion has an arc-shaped side on which the guiding groove is opened, and the central axis of the circumference where the arc-shaped side is and the axis of rotation of the rotation shaft coincide.

Preferably, the moving mould plate is substantially provided along a vertical direction and the extending direction of height of the moving mould plate is parallel to the axis of rotation of the rotation shaft.

Due to the above technical solution, the present invention has the following advantages as compared with the prior art: in the bottle blowing machine of invention, three assemblies are simultaneously driven by a rotation shaft to move, and the steps of mould closing, elevating and locking are simultaneously performed. Thus, the bottle blowing machine of the invention is simple in structure and convenient in operation, thereby improving the efficiency of the process of bottle blowing.

### Brief Description of the Drawings

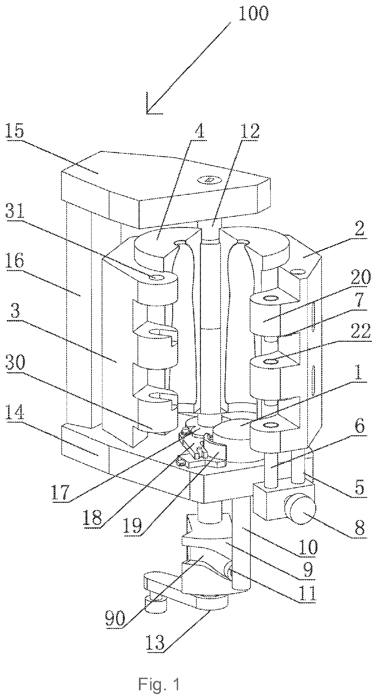

Fig.1 is a schematic drawing of a bottle blowing machine in mould opening state according to the invention.

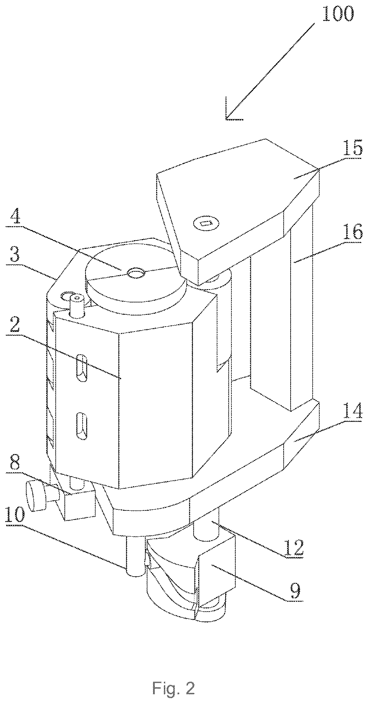

Fig.2 is a schematic drawing of the bottle blowing machine in mould closing state according to the invention.

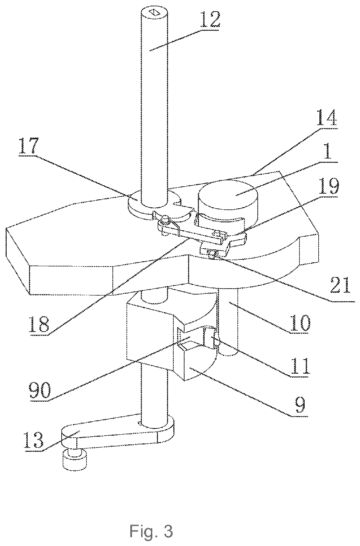

Fig.3 is a schematic drawing of the bottle blowing machine in mould opening state according to the invention, wherein the machine frame is omitted.
Fig.4 is a schematic drawing of the bottle blowing machine in mould closing state according to the invention, wherein the machine frame is omitted.
Fig.5 is a schematic drawing of a locking mechanism of the bottle blowing machine according to the invention.

### List of Reference Signs

- 1: bottom mould;
- 2: fixed mould plate;
- 100: machine frame;
- 20: second connecting protrusion;
- 22: hole;
- 3: moving mould plate;
- 30: first connecting protrusion;
- 31: pin hole;
- 4: mould;
- 5: connecting shaft;
- 6: locking pin;
- 7: connecting rod;
- 8: driving block;
- 9: protrusion;
- 90: guiding groove;
- 10: elevating rod;
- 11: sliding block;
- 12: rotation shaft;
- 13: swing arm;
- 14: support frame;
- 15: upper frame;
- 16: upright frame;
- 17: rotation member;
- 170: guiding surface;
- 18: swing member;
- 180: projection;
- 181: U-shaped portion;
- 19: locking part;
- 190: convex column;
- 21: guide rail.

### Description of the Preferred Embodiments

The present invention will be described hereinafter with reference to the accompanying drawings. It is to be noted, however, that the drawings are given only for illustrative purpose and therefore not to be considered as limiting of its scope, for the invention may admit to other equally effective embodiments.

As shown in fig.s 1-4, a bottle blowing machine comprises a machine frame 100, a mould opening and closing assembly disposed on the machine frame, an elevating assembly, a bottom locking assembly and a driving assembly for driving the above assemblies.

The assemblies will be illustrated hereinafter in more detail: the mould opening and closing assembly which has a mould opening state and a mould closing state comprises a fixed mould plate 2 fixedly disposed on the machine frame 100, a bottom mould 1 slidable in a vertical direction relative to the fixed mould plate, and a moving mould plate 3 rotatably connected with the fixed mould plate 2 by a rotation shaft 12. When the mould opening and closing assembly is in the mould closing state, the fixed mould plate 2, the moving mould plate 3 and the bottom mould 1 together enclose to provide a cavity.

The elevating assembly comprises a protrusion 9 fixed disposed on the rotation shaft 12, an elevating rod 10 fixedly connected with the bottom mould 1, and a sliding block 11 fixed on the elevating rod 10. A guiding groove 90 is opened on the protrusion 9, and the sliding block 11 is slidably inserted into the guiding groove 90. In the course of rotation of the rotation shaft 12, the contact position of the guiding groove 90 with the sliding block 11 rises or descends, and the sliding block 11 moves in the up-down direction under the guiding of the guiding groove 90.

The bottom mould locking assembly comprises: a locking part 19 slidably disposed on the machine frame 100; a swing member 18 for driving the sliding of the locking part 19, which is swingably connected with the machine frame 100 around a first axis; a rotation member 17 for controlling the swinging of the swing member 18 relative to the machine frame 100, which is rotatable relative to the machine frame 100 around a second axis and fixedly connected with the rotation shaft 12. When the mould opening and closing assembly is in the mould closing state, the locking part 19 contacts against the bottom mould 1 such that the bottom mould 1 is separated from the machine frame 100. The rotation shaft 12 sequentially extends through the moving mould plate 3, the rotation member 17 and the protrusion 9 from up to down.

The power source is used for driving the rotation of the rotation shaft 12.

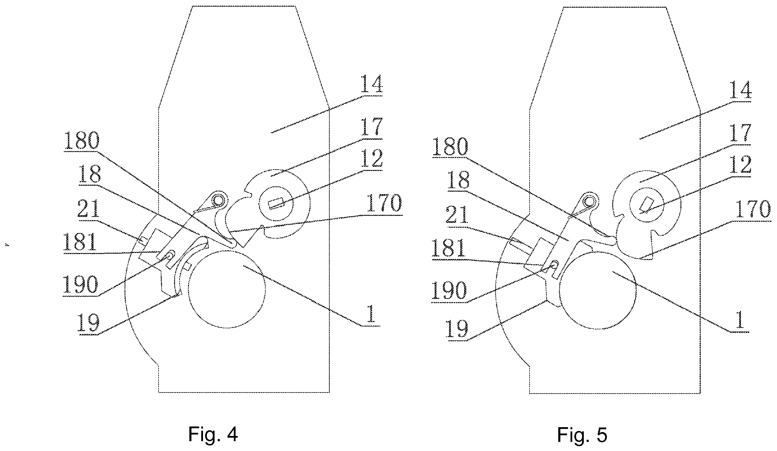

As shown in fig.5, the mould opening and closing assembly also comprises a locking mechanism for locking the moving mould plate 3 with the fixed mould plate 2 when in the mould closing state. The moving mould plate 3 is provided with at least one first connecting protrusion 30 on which a pin hole 31 is opened. The fixed mould plate 2 is provided with a second connecting protrusion 20 staggered with the first connection protrusion 30 in up-down direction. The locking mechanism comprises a connecting shaft 5 slidably disposed on the fixed mould plate 2, a connecting rod 7 fixedly connected with the connecting shaft 5 and a locking pin 6 fixedly connected with the connecting rod 7. A hole 22 is opened on the second connecting protrusion 20 for the connecting rod 7 and the locking pin 6 sliding therein. When the mould opening and closing assembly is in the mould opening state, the locking pin 6 is positioned in the hole 22. When the mould opening and closing assembly is in the mould closing state, the locking pin 6 slides relative to the second connecting protrusion 20 and extends through the hole 22 to insert into the pin hole 31.

The rotation member 17 has a guiding surface 170 thereon. A projection 180 is formed on the swing member 18 and the projection 180 slidably contacts with the guiding surface 170 relative to each other, and the distance between the contact position of the projection 180 with the guiding surface 170 and the second axis changes with the rotation of the rotation member 7.

An elastic member is arranged between the swing member 18 and the machine frame 100 for providing a restoring force for the swing member 18. A convex column 190 is formed on the locking part 19 and a U-shaped portion 181 is provided on the swing member 18 at a distance from the first axis, and the convex column 190 is slidably inserted into the U-shaped portion 181.

The machine frame 100 comprises a support frame 14, an upper frame 15 located above the support frame 14 and an upright frame 16 fixedly connected between the support frame 14 and the upper frame 15. The mould opening and closing assembly and bottom locking assembly are located above the support frame 14, and the protrusion 9 is located below the support frame 14.

A first through-hole for the elevating rod 10 extending through therein and a second through-hole for the rotation shaft 12 extending through therein respectively are opened on the supporting frame 14. The elevating rod 10 is slidable in the first through-hole in the up-down direction, and the rotation shaft 12 is rotatable in the second through-hole. An upper end of the rotation shaft 12 is rotatably connected with the upper frame 15.

The first axis and second axis are parallel to each other. The rotation member 17, the swing member 18 and the first locking part 19 are located above the upper surface of the support frame 14.

A swing arm 13 is connected on the lower end of the rotation shaft 12 for driving the rotation shaft 12. The power source drives the rotation of the rotation shaft 12 by the swing arm 13. The swing arm 13 is fixedly connected with the lower end of the rotation shaft 12.

The axis of rotation of the rotation shaft 12 is parallel to the direction of movement of the elevating rod 10 relative to the machine frame 10. The guiding groove 90 inclinedly extends relative to a plane perpendicular to the axis of rotation.

The protrusion 9 has an arc-shaped side on which the guiding groove 90 is opened, and the central axis of the circumference where the arc-shaped side is and the axis of rotation of the rotation shaft 12 coincide.

The moving mould plate 3 is substantially provided along a vertical direction and the extending direction of height of the moving mould plate 3 is parallel to the axis of rotation of the rotation shaft 12.

The above embodiment is described for illustrating the technical concept and features of the invention, the aim is intended to enable a person skilled in the art to appreciate the content of the invention and further implement it, and the protecting scope of the invention can not be limited hereby. Also, any equivalent variations or modifications made according to the invention should be covered within the protecting scope of the invention as defined by the appended claims.

## Claims

1. A bottle blowing machine, comprising
a machine frame (100);
a mould opening and closing assembly having a mould opening state and a mould closing state, which comprises a fixed mould plate (2) fixedly disposed on the machine frame (100), a bottom mould (1) being slidable in a vertical direction relative to the fixed mould plate, and a moving mould plate (3) rotatably connected with the fixed mould plate (2) by a rotation shaft (12), wherein, when the mould opening and closing assembly is in the mould closing state, the fixed mould plate (2), the moving mould plate (3) and the bottom mould (1) together enclose to provide a cavity;
an elevating assembly comprising a protrusion (9) fixedly disposed on the rotation shaft (12), an elevating rod (10) fixedly connected with the bottom mould (1), and a sliding block (11) fixed on the elevating rod (10), a guiding groove (90) being opened on the protrusion (9), and the sliding block (11) being slidably inserted into the guiding groove (90), wherein, in the course of rotation of the rotation shaft (12), the contact position of the guiding groove (90) with the sliding block (11) rises or descends, and the sliding block (11) moves in an up-down direction under the guiding of the guiding groove (90);
a bottom mould locking assembly comprising a locking part (19) slidably disposed on the machine frame (100), a swing member (18) swingably connected with the machine frame (100) around a first axis for driving the sliding of the locking part (19), a rotation member (17) fixedly connected with the rotation shaft (12) and rotatable relative to the machine frame (100) around a second axis for controlling the swinging of the swing member (18) relative to the machine frame (100), wherein, when the mould opening and closing assembly is in the mould closing state, the locking part (19) contacts against the bottom mould (1) such that the bottom mould (1) is separated from the machine frame (100); and
a power source for driving the rotation of the rotation shaft (12).

2. The bottle blowing machine as claimed in claim 1, wherein the rotation shaft (12) sequentially extends through the moving mould plate (3), the rotation member (17) and the protrusion (9) from up to down.

3. The bottle blowing machine as claimed in claim 1, wherein the mould opening and closing assembly also comprises a locking mechanism for locking the moving mould plate (3) with the fixed mould plate (2) in the mould closing state, the locking mechanism comprising a connecting shaft (5) slidably disposed on the fixed mould plate (2), a connecting rod (7) fixedly connected with the connecting shaft (5) and a locking pin (6) fixedly connected with the connecting rod (7), at least one first connecting convex platform (30) being provided on the moving mould plate (3), and a pin hole (31) being opened on the connecting convex platform (30), a second connecting projection (20) staggered with the first connection projection (30) in up-down direction being provided on the fixed mould plate (2), and a hole (22) being opened on the second connecting convex platform for the connecting rod (7) and the locking pin (6) sliding therein (20), when in the mould opening state, the locking pin (6) is positioned in the hole (22), and when in the mould closing state, the locking pin (6) slides relative to the second connecting convex platform (20) and extends through the hole (22) to insert into the pin hole (31).

4. The bottle blowing machine as claimed in claim 1, wherein the rotation member (17) has a guiding surface (170) thereon and a projection (180) is formed on the swing member (18), the swing member (18) slidably contacts with the guiding surface (170) relative to each other, and the distance between the contact position of the projection (180) with the guiding surface (170) and the second axis changing with the rotation of the rotation member (7).

5. The bottle blowing machine as claimed in claim 1, wherein an elastic member is arranged between the swing member (18) and the machine frame (100) for providing a restoring force for the swing member (18), a convex column (190) being formed on the locking part (19) and a U-shaped portion (181) being formed on the swing member (18) at a distance from the first axis, and the convex column (190) being slidably inserted into the U-shaped portion (181).

6. The bottle blowing machine as claimed in any of claims 1-5, wherein the machine frame (100) comprises a support frame (14), an upper frame (15) located above the support frame (14) and an upright frame (16) fixedly connected between the support frame (14) and the upper frame (15), the mould opening and closing assembly and bottom locking assembly being located above the support frame (14), and the protrusion (9) being located below the support frame (14).

7. The bottle blowing machine as claimed in claim 6, wherein a first through-hole for the elevating rod (10) extending through therein and a second through-hole for the rotation shaft (12) extending through therein respectively are opened on the support frame (14), the elevating rod (10) being slidable in the first through-hole in the up-down direction, and the rotation shaft (12) being rotatable in the second through-hole.

8. The bottle blowing machine as clamed in claim 6, wherein an upper end of the rotation shaft (12) is rotatably connected with the upper frame (15).

9. The bottle blowing machine as clamed in claim 6, wherein the first axis and second axis are parallel to each other, the rotation member (17), the swing member (18) and the locking part (19) being located above an upper surface of the support frame (14).

10. The bottle blowing machine as clamed in claim 1, wherein a swing arm (13) is connected on a lower end of the rotation shaft (12), and the power source driving the rotation of the rotation shaft (12) by the swing arm (13).

11. The bottle blowing machine as clamed in claim 10, wherein the swing arm (13) is fixedly connected with the lower end of the rotation shaft (12).

12. The bottle blowing machine as clamed in claim 1, wherein the axis of rotation of the rotation shaft (12) is parallel to the direction of movement of the elevating rod (10) relative to the machine frame, and the guiding groove (90) inclinedly extending relative to a plane perpendicular to the axis of rotation.

13. The bottle blowing machine as clamed in claim 12, wherein the protrusion (9) has an arc-shaped side on which the guiding groove (90) is opened, the central axis of the circumference where the arc-shaped side is and the axis of rotation of the rotation shaft (12) coincide.

14. The bottle blowing machine as clamed in claim 1, wherein the moving mould plate (3) is substantially provided along a vertical direction and the extending direction of height of the moving mould plate (3) is parallel to the shaft axis of the rotation shaft (12).

## Patentansprüche

1. Flaschenblasmaschine, aufweisend
einen Maschinenrahmen (100);
eine Anordnung zum Öffnen und Schließen einer Form, die einen Formöffnungszustand und einen Formschließzustand aufweist und eine feststehende Formplatte (2), die fest auf dem Maschinenrahmen (100) angeordnet ist, eine Unterform (1), die in eine vertikale Richtung bezüglich der feststehenden Formplatte verschiebbar ist, und eine bewegliche Formplatte (3), die über eine Drehwelle (12) drehbar mit der feststehenden Formplatte (2) verbunden ist, aufweist, wobei, wenn die Anordnung zum Öffnen und Schließen einer Form im Formschließzustand ist, sich die feststehende Formplatte (2), die bewegliche Formplatte (3) und die Unterform (1) miteinander verschließen, um einen Hohlraum bereitzustellen;
eine Hebevorrichtung, die einen Vorsprung (9), der fest auf der Drehwelle (12) angeordnet ist, eine Hebestange (10), die mit der Unterform (1) fest verbunden ist, und einen Gleitblock (11), der auf der Hebestange (10) befestigt ist, aufweist, wobei eine Führungsnut (90) auf dem Vorsprung (9) offen ist und der Gleitblock (11) verschiebbar in die Führungsnut (90) eingesetzt wird, wobei sich im Zuge der Drehung der Drehwelle (12) die Kontaktposition der Führungsnut (90) mit dem Gleitblock (11) aufwärts- oder abwärts bewegt und sich der Gleitblock (11) unter der Führung der Führungsnut (90) in einer Aufwärts- und Abwärtsrichtung bewegt;
eine Unterformverriegelungsanordnung, die einen Verriegelungsteil (19), der verschiebbar auf dem Maschinenrahmen (100) angeordnet ist, ein Schwenkelement (18), das um eine erste Achse zum Antreiben der Verschiebung des Verriegelungsteils (19) mit dem Maschinenrahmen (100) schwenkbar verbunden ist, ein Drehelement (17), das mit der Drehwelle (12) fest verbunden ist und um eine zweite Achse zum Steuern des Schwenkens des Schwenkelements (18) bezüglich des Maschinenrahmens (100) drehbar bezüglich des Maschinenrahmens (100) ist, aufweist, wobei, wenn die Anordnung zum Öffnen und Schließen einer Form im Formschließzustand ist, der Verriegelungsteil (19) derart mit der Unterform (1) in Kontakt steht, dass die Unterform (1) vom Maschinenrahmen (100) getrennt ist; und
eine Energiequelle zum Antreiben der Drehung der Drehwelle (12).

2. Flaschenblasmaschine nach Anspruch 1, wobei sich die Drehwelle (12) sequenziell von oben nach unten durch die bewegliche Formplatte (3), das Drehelement (17) und den Vorsprung (9) erstreckt.

3. Flaschenblasmaschine nach Anspruch 1, wobei die Anordnung zum Öffnen und Schließen einer Form ferner einen Verriegelungsmechanismus zum Verriegeln der beweglichen Formplatte (3) mit der feststehenden Formplatte (2) im Formschließzustand aufweist, wobei der Verriegelungsmechanismus eine Verbindungswelle (5), die verschiebbar auf der feststehenden Formplatte (2) angeordnet ist, eine Verbindungsstange (7), die mit der Verbindungswelle (5) fest verbunden ist, und einen Verriegelungsstift (6), der mit der Verbindungsstange (7) fest verbunden ist, aufweist, wobei zumindest eine erste konvexe Verbindungsplattform (30) auf der beweglichen Formplatte (3) bereitgestellt wird, und wobei ein Stiftloch (31) auf der konvexen Verbindungsplattform (30) offen ist, wobei ein zweiter Verbindungsvorsprung (20), der in einer Aufwärts- und Abwärtsrichtung versetzt mit dem ersten Verbindungsvorsprung (30) angeordnet ist, auf der feststehenden Formplatte (2) bereitgestellt wird, und wobei ein Loch (22) auf der zweiten konvexen Verbindungsplattform für die Verbindungsstange (7) und den sich darin verschiebenden (20) Verriegelungsstift (6) offen ist, wobei im Formöffnungszustand der Verriegelungsstift (6) im Loch (22) positioniert ist und im Formschließzustand der Verriegelungsstift (6) sich bezüglich der zweiten konvexen Verbindungsplattform (20) verschiebt und sich durch das Loch (22) erstreckt, um ins Stiftloch (31) eingesetzt zu werden.

4. Flaschenblasmaschine nach Anspruch 1, wobei das Drehelement (17) eine Führungsfläche (170) darauf aufweist und ein Vorsprung (180) auf dem Schwenkelement (18) ausgebildet ist, wobei das Schwenkelement (18) mit der Führungsfläche (170) verschiebbar bezüglich einander in Kontakt steht und sich der Abstand zwischen der Kontaktposition des Vorsprungs (180) mit der Führungsfläche (170) und der zweiten Achse mit der Drehung des Drehelements (7) ändert.

5. Flaschenblasmaschine nach Anspruch 1, wobei ein elastisches Element zwischen dem Schwenkelement (18) und dem Maschinenrahmen (100) zum Bereitstellen einer Rückstellkraft für das Schwenkelement (18) angeordnet ist, wobei eine konvexe Säule (190) auf dem Verriegelungsteil (19) ausgebildet ist und ein U-förmiger Abschnitt (181) auf dem Schwenkelement (18) in einem Abstand von der ersten Achse ausgebildet ist, und wobei die konvexe Säule (190) verschiebbar in den U-förmigen Abschnitt (181) eingesetzt wird.

6. Flaschenblasmaschine nach einem der Ansprüche 1-5, wobei der Maschinenrahmen (100) einen Stützrahmen (14), einen oberen Rahmen (15), der über dem Stützrahmen (14) angeordnet ist, und einen aufrechten Rahmen (16), der zwischen dem Stützrahmen (14) und dem oberen Rahmen (15) fest verbunden ist, aufweist, wobei die Anordnung zum Öffnen und Schließen einer Form und die untere Verriegelungsanordnung über dem Stützrahmen (14) angeordnet sind, und wobei der Vorsprung (9) unter dem Stützrahmen (14) angeordnet ist.

7. Flaschenblasmaschine nach Anspruch 6, wobei ein erstes Durchgangsloch für die sich durch es hindurch erstreckende Hebestange (10) und ein zweites Durchgangsloch für die sich durch es hindurch erstreckende Drehwelle (12) jeweils auf dem Stützrahmen (14) offen sind, wobei die Hebestange (10) im ersten Durchgangsloch in der Aufwärts- und Abwärtsrichtung verschiebbar ist und die Drehwelle (12) sich im zweiten Durchgangsloch drehen kann.

8. Flaschenblasmaschine nach Anspruch 6, wobei ein oberes Ende der Drehwelle (12) mit dem oberen Rahmen (15) drehbar verbunden ist.

9. Flaschenblasmaschine nach Anspruch 6, wobei die erste Achse und die zweite Achse parallel zueinander sind, wobei das Drehelement (17), das Schwenkelement (18) und der Verriegelungsteil (19) über einer Oberseite des Stützrahmens (14) angeordnet sind.

10. Flaschenblasmaschine nach Anspruch 1, wobei ein Schwenkarm (13) auf einem unteren Ende der Drehwelle (12) angeschlossen ist, und die Energiequelle die Drehung der Drehwelle (12) durch den Schwenkarm (13) antreibt.

11. Flaschenblasmaschine nach Anspruch 10, wobei der Schwenkarm (13) mit dem unteren Ende der Drehwelle (12) fest verbunden ist.

12. Flaschenblasmaschine nach Anspruch 1, wobei die Drehachse der Drehwelle (12) parallel zur Bewegungsrichtung der Hebestange (10) bezüglich des Maschinenrahmens ist, und wobei sich die Führungsnut (90) schräg bezüglich einer Ebene senkrecht zur Drehachse erstreckt.

13. Flaschenblasmaschine nach Anspruch 12, wobei der Vorsprung (9) eine bogenförmige Seite, auf der die Führungsnut (90) offen ist, aufweist, wobei die Mittelachse des Umfangs, auf dem die bogenförmige Seite ist, und die Drehachse der Drehwelle (12) zusammenfallen.

14. Flaschenblasmaschine nach Anspruch 1, wobei die bewegliche Formplatte (3) im Wesentlichen entlang einer vertikalen Richtung bereitgestellt wird und die Erstreckungsrichtung der Höhe der beweglichen Formplatte (3) parallel zur Wellenachse der Drehwelle (12) ist.

## Revendications

1. Machine de soufflage de bouteille, comprenant
un bâti de machine (100) ;
un ensemble d'ouverture et de fermeture de moule ayant un état d'ouverture de moule et un état de fermeture de moule qui comprend une plaque de moule (2) fixe disposée de manière fixe sur le bâti de machine (100), un moule inférieur (1) pouvant coulisser dans une direction verticale par rapport à la plaque de moule fixe, et une plaque de moule (3) mobile reliée de manière rotative à la plaque de moule (2) fixe par un arbre tournant (12), la plaque de moule (2) fixe, la plaque de moule (3) mobile et le moule inférieur (1) se fermant ensemble pour fournir une cavité quand l'ensemble d'ouverture et de fermeture de moule est dans l'état de fermeture de moule ;
un ensemble de levage comprenant une saillie (9) disposée de manière fixe sur l'arbre rotatif (12), une tige de levage (10) reliée de manière fixe au moule inférieur (1), et un bloc coulissant (11) fixé sur la tige de levage (10), une rainure de guidage (90) étant ouverte sur la saillie (9), et le bloc coulissant (11) étant inséré de manière coulissante dans la rainure de guidage (90), la position de contact de la rainure de guidage (90) avec le bloc coulissant (11) ascendant et descendant et le bloc coulissant (11) se déplaçant dans une direction vers le haut et vers le bas en étant guidé par la rainure de guidage (90), au cours de la rotation de l'arbre rotatif (12) ;
un ensemble de verrouillage du moule inférieur comprenant une partie de verrouillage (19) disposée de manière coulissante sur le bâti de machine (100), un élément oscillant (18) relié de manière oscillante au bâti de machine (100) autour d'un premier axe pour entraîner le coulissement de la partie de verrouillage (19), un élément rotatif (17) relié de manière fixe à l'arbre rotatif (12) et pouvant tourner par rapport au bâti de machine (100) autour d'un deuxième axe pour commander l'oscillation de l'élément oscillant (18) par rapport au bâti de machine (100), la partie de verrouillage (19) entrant en contact avec le moule inférieur (1) de telle manière que le moule inférieur (1) soit séparé du bâti de machine (100) quand l'ensemble d'ouverture et de fermeture de moule est dans l'état de fermeture de moule ; et
une source d'alimentation destinée à entraîner la rotation de l'arbre rotatif (12).

2. Machine de soufflage de bouteille selon la revendication 1, dans laquelle l'arbre rotatif (12) s'étend successivement à travers la plaque de moule (3) mobile, l'élément rotatif (17) et la saillie (9) de haut en bas.

3. Machine de soufflage de bouteille selon la revendication 1, dans laquelle l'ensemble d'ouverture et de fermeture de moule comprend en outre un mécanisme de verrouillage pour verrouiller la plaque de moule (3) mobile à la plaque de moule (2) fixe dans l'état de fermeture de moule, le mécanisme de verrouillage comprenant un arbre de liaison (5) disposé de manière coulissante sur la plaque de moule (2) fixe, une tige de liaison (7) reliée de manière fixe à l'arbre de liaison (5), et une goupille de verrouillage (6) reliée de manière fixe à la tige de verrouillage (7), au moins une première plate-forme de liaison (30) convexe étant prévue sur la plaque de moule (3) mobile, et un trou de goupille (31) étant ouvert sur la plate-forme de liaison (30) convexe, une deuxième partie saillante de liaison (20) décalée par rapport à la première partie saillante de liaison (30) dans une direction vers le haut et vers le bas étant prévue sur la plaque de moule (2) fixe, et un trou (22) étant ouvert sur la deuxième plate-forme de liaison convexe pour la tige de liaison (7) et la goupille de verrouillage (6) coulissant dans celui-ci (20), la goupille de verrouillage (6) étant positionnée dans le trou (22) dans l'état d'ouverture de moule, et la goupille de verrouillage (6) coulissant par rapport à la deuxième plate-forme de liaison (20) convexe et s'étendant à travers le trou (22) pour être insérée dans le trou de goupille (31) dans l'état de fermeture de moule.

4. Machine de soufflage de bouteille selon la revendication 1, dans laquelle l'élément rotatif (17) a une surface de guidage (170) sur celui-ci, et une partie saillante (180) est formée sur l'élément oscillant (18), l'élément oscillant (18) étant en contact coulissant avec la surface de guidage (170), et la distance entre la position de contact de la partie saillante (180) avec la surface de guidage (170) et le deuxième axe changeant avec la rotation de l'élément rotatif (7).

5. Machine de soufflage de bouteille selon la revendication 1, dans laquelle un élément élastique est disposé entre l'élément oscillant (18) et le bâti de machine (100) pour fournir une force de rappel pour l'élément oscillant (18), une colonne convexe (190) étant formée sur la partie de verrouillage (19), et une partie en forme de U (181) étant formée sur l'élément oscillant (18) à une distance du premier axe, et la colonne convexe (190) étant insérée de manière coulissante dans la partie en forme de U (181).

6. Machine de soufflage de bouteille selon l'une des revendications 1-5, dans laquelle le bâti de machine (100) comprend un cadre de support (14), un cadre supérieur (15) situé au-dessus du cadre de support (14), et un cadre vertical (16) relié de manière fixe entre le cadre de support (14) et le cadre supérieur (15), l'ensemble d'ouverture et de fermeture de moule et l'ensemble de verrouillage inférieur étant situés au-dessus du cadre de support (14), et la saillie (9) étant située au-dessous du cadre de support (14).

7. Machine de soufflage de bouteille selon la revendication 6, dans laquelle un premier trou traversant pour la tige de levage (10) s'étendant à travers celui-ci et un deuxième trou traversant pour l'arbre rotatif (12) s'étendant à travers celui-ci sont ouverts respectivement sur le cadre de support (14), la tige de levage (10) pouvant coulisser dans le premier trou traversant dans la direction vers le haut et vers le bas, et l'arbre rotatif (12) pouvant tourner dans le deuxième trou traversant.

8. Machine de soufflage de bouteille selon la revendication 6, dans laquelle une extrémité supérieure de l'arbre rotatif (12) est reliée de manière rotative au cadre supérieur (15).

9. Machine de soufflage de bouteille selon la revendication 6, dans laquelle le premier axe et le deuxième axe sont parallèles entre eux, l'élément rotatif (17), l'élément oscillant (18) et la partie de verrouillage (19) étant situés au-dessus d'une surface supérieure du cadre de support (14).

10. Machine de soufflage de bouteille selon la revendication 1, dans laquelle un bras oscillant (13) est relié à une extrémité inférieure de l'arbre rotatif (12), et la source d'alimentation entraîne la rotation de l'arbre rotatif (12) par le bras oscillant (13).

11. Machine de soufflage de bouteille selon la revendication 10, dans laquelle le bras oscillant (13) est relié de manière fixe à l'extrémité inférieure de l'arbre rotatif (12).

12. Machine de soufflage de bouteille selon la revendication 1, dans laquelle l'axe de rotation de l'arbre rotatif (12) est parallèle à la direction de déplacement de la tige de levage (10) par rapport au bâti de machine, et la rainure de guidage (90) s'étend de manière inclinée par rapport à un plan perpendiculaire à l'axe de rotation.

13. Machine de soufflage de bouteille selon la revendication 12, dans laquelle la saillie (9) a un côté arqué sur lequel est ouverte la rainure de guidage (90), l'axe central de la circonférence où est le côté arqué et l'axe de rotation de l'arbre rotatif (12) coïncidant.

14. Machine de soufflage de bouteille selon la revendication 1, dans laquelle la plaque de moule (3) mobile est prévue essentiellement le long d'une direction verticale, et la direction d'extension de la hauteur de la plaque de moule (3) mobile est parallèle à l'axe d'arbre de l'arbre rotatif (12).
